# EUROPÄISCHE PATENTSCHRIFT

(11) **EP 1 053 147 B1**
(45) Veröffentlichungstag und Bekanntmachung des Hinweises auf die Patenterteilung: **07.11.2001**
(21) Anmeldenummer: 98965818.2
(22) Anmeldetag: 12.12.1998
(51) Int. Cl.: B60T 1/06, B60K 17/04

(54) **RADNABE MIT INTEGRIERTEM PLANETENGETRIEBE UND LAMELLENBREMSE**
WHEEL HUB WITH INTEGRATED PLANETARY GEAR AND MULTIPLE DISC BRAKE
MOYEU DE ROUE A ENGRENAGE PLANETAIRE INTEGRE ET FREIN MULTIDISQUE

(30) Priorität: 13.02.1998 DE 19805881
(43) Veröffentlichungstag der Anmeldung: 22.11.2000
(73) Patentinhaber: O & K Antriebstechnik GmbH, 45525 Hattingen (DE)
(72) Erfinder: KOHLMEIER, Dietmar, D-44229 Dortmund (DE); MEISE, Andreas, D-44797 Bochum (DE); WOLFF, Friedrich, D-58300 Wetter (DE)
(74) Vertreter: Meinke, Jochen
(86) Internationale Anmeldenummer: EP9808114
(87) Internationale Veröffentlichungsnummer: WO9941118

(56) Entgegenhaltungen:
- DE-A- 3 832 649
- DE-A- 4 439 360
- DE-C- 19 640 146
- FR-A- 2 514 091
- GB-A- 900 326
- GB-A- 1 595 713

## Beschreibung

Die Erfindung betrifft eine Radnabe mit integriertem Planetengetriebe und Lamellenbremse, wobei das Planetengetriebe ein Ritzel, einen Planetenträger mit daran gehaltenen Planetenrädern und ein Hohlrad aufweist, wobei die Lamellenbremse Innenlamellen und Außenlamellen, die direkt mit der Radnabe In Wirkverbindung stehen, sowie einen Bremsträger, einen Bremskolben und zugehörige Dichtungen und einen Bremsstützring aufweist, wobei die Innenlamellen über den Bremsträger mit einem Achskörper verbunden sind, wobei der Bremsträger einen innen angeordneten Befestigungsflansch sowie eine Bohrung als Innenkontur für die Montage des Ritzels aufweist, wobei zumindest der Bremsträger, die Bremslamellen, der Bremstützring und ein Element des Planetengetriebes als eine Montagebaugruppe ausgebildet sind, die über den Befestigungsflansch und Befestigungselemente mit dem Achskörper verbunden ist, und wobei die Radnabe topfförmig ist und ein anderes Element des Planetengetriebes enthält und als weitere Montagebaugruppe ausgebildet ist, die über die eine Montagebaugruppe schiebbar ist, wobei die topfförmige Radnabe in die Außenlamellen der Bremse eingreift.

Bei Radnaben mit integrierter Lamellenbremse und integriertem Planetengetriebe, die insbesondere für Bau- und Arbeitsmaschinen eingesetzt werden, gibt es im Hinblick auf die Anordnung der Bremse Ausführungen, bei denen die Bremse ein Bauteil des Planetengetriebes mit dem feststehenden Tragkörper verbindet oder mit einer anderen Getriebewelle verspannt (DE 44 39 360 A1 und US 4,317,498). Bei diesen Ausführungen ist die Radnabe nicht absolut festgebremst, sondern sie kann eine Bewegung abhängig von der Größe des Getriebespiels ausführen.

Aus DE 38 32 649 A1 und der gattungsgemäßen DE 196 40 146 C1 der Anmelderin sind Radnabenausführungen bekannt, bei denen die Bremse die Abtriebsnabe mit dem Tragkörper verbindet und somit spielfrei den Abtrieb festsetzt. In DE 38 32 649 Al ist ein Beispiel für diese Bauart gezeigt. Diese bekannte Radnabe weist einen hohen Bauaufwand und viele Bauteile auf und dadurch bedingt eine aufwendige Montage. Außerdem ist eine große Baulänge gegeben. Auch ist der Zugang zu den Lamellen der Bremse schlecht, da diese zwischen den Lagern liegt. Bei Fahrzeugen ist es jedoch erforderlich, daß der Zugang zu den Lamellen einfach sein muß, damit der Verschleißzustand der Bremse leicht festgestellt werden kann. Die Bremsstützplatte und der Hohlradträger sind zwei verschiedene Bauteile.

Nachteilig bei der in der gattungsgemäßen DE 196 40 146 C1 beschriebenen Lösung ist jedoch, daß das Hohlrad gleichzeitig die Radnabe bildet und ein Lastausgleich des Planetengetriebes über das Hohlrad nicht erfolgen kann. Bekanntlich werden bei Planetengetrieben die Drehmomente auf mehrere Planetenträger verteilt. Sind dabei zwei benachbarte Getriebeglieder (Sonne/Planet; Planet/Hohlrad) radial fixiert, wird die Aufteilung der Momente je nach Lage der Zahnräder zueinander unterschiedlich sein. Weiterhin bedingt diese Bauart einen schwierigen Zugang zu den Lamellen und Dichtungen sowie bauartbedingt durch den Hohlradabtrieb eine relativ kleine Planetenübersetzung.

Aufgabe der Erfindung ist es, die vorgenannten Nachteile zu vermeiden und eine kostengünstigere Radnabe mit direkter Lamellenbremse und Planetengetriebe so zu schaffen, daß sie einfach im Aufbau und leicht zu montieren ist, wobei eine kurze Bauform gewünscht ist, welche gleichzeitig durch Stegabtrieb des Planetengetriebes eine große Übersetzung zuläßt und ggf. in dem vorgegebenen Bauraum ein zweistufiges Planetengetriebe ermöglicht.

Diese Aufgabe wird mit einer Radnabe der eingangs bezeichneten Art erfindungsgemäß dadurch gelöst, daß die eine erste Montagebaugruppe neben dem Bremsträger, den Bremslamellen und dem Bremsstützring auch den Bremskolben mit dessen Dichtungen sowie das Hohlrad enthält, wobei das Hohlrad an der ersten Montagebaugruppe befestigt ist, und daß die weitere zweite Montagebaugruppe neben der einteiligen topfförmigen Radnabe auch die Planetenräder und deren Lager aufweist.

Erkennbar wird durch diese Aufteilung der Radnabe in nur zwei Montagebaugruppen eine Radnabe erreicht, die einfach im Aufbau und leicht zu montieren ist, so daß insbesondere auch der Zugang zu den Lamellen der Bremse sehr gut ist, so daß auf einfache Weise deren Verschleißzustand festgestellt werden kann. Außerdem sind bei der erfindungsgemäßen Ausgestaltung das Sonnenritzel und das Hohlrad beschränkt radial beweglich gelagert. Würde nun beispielsweise ein Planetenrad mehr Moment erzeugen als die anderen, verschöben die Verzahnungskräfte das Hohlrad und das Sonnenritzel in Richtung der weniger belasteten Planeten, so daß diese mehr Moment aufnähmen. Durch diese Maßnahme wird der sinnvolle Einsatz von vier und mehr Planetenrädern möglich.

Die Montage der Radnabe ist ersichtlich besonders einfach, nach der Montage der ersten Montagebaugruppe (Bremsträgerbaugruppe) läßt sich die zweite Montagebaugruppe auf einfache Weise montieren, indem diese mit der Radnabe einfach über die erste Montagebaugruppe geschoben und dann befestigt wird. Die Demontage kann auf umgekehrte Weise erfolgen. Die gesamte Radnabe besteht somit im wesentlichen aus nur zwei voneinander getrennten Baugruppen.

In vorteilhafter Ausgestaltung ist vorgesehen, daß das Hohlrad an dem Bremsstützring befestigt ist, was z.B. mittels eines Sicherungsringes geschehen kann.

Ferner ist vorteilhaft vorgesehen, daß zur Bildung der zweiten Montagebaugruppe der Planetenträger vom Lagerzapfen der Radnabe gebildet ist, auf denen die Planetenräder angeordnet sind.

In weiterer vorteilhafter Ausgestaltung ist vorgesehen, daß der Bremsträger eine topfförmige Innenkontur aufweist. Dadurch steht innerhalb des Bremsträgers ein zusätzlicher Bauraum zur Verfügung.

Dieser zusätzliche Bauraum kann besonders vorteilhaft dazu benutzt werden, daß innerhalb der topfförmigen Innenkontur des Bremsträgers ein zweites Planetengetriebe angeordnet ist, wobei der Bremsträger die Verzahnung des Hohlrades des zweiten Planetengetriebes bildet. Somit läßt sich bei gegebenem Bauraum ohne Probleme ein zweistufiges Planetengetriebe verwirklichen.

Alternativ kann auch vorgesehen sein, daß der Bremsträger als Innenkontur nur eine Bohrung für die Ritzelmontage aufweist.

Zur weiteren Vereinfachung der Montage ist vorteilhaft vorgesehen, daß die Dichtungen des stufenförmigen Bremskolbens in Umfangsnuten des Bremskolbens angeordnet sind. Dies ermöglicht eine einfache Montage der Dichtungen ohne Hilfsmittel.

Ferner läßt sich die Montage der Radnabe noch weiter dadurch vereinfachen, daß die Radlager über Einstellscheiben durch den Bremsträger verspannbar sind. Bei der Montage der den Bremsträger enthaltenen ersten Montagebaugruppe läßt sich dann auf einfache Weise auch eine Einstellung der Radlager erreichen.

Die Erfindung ist nachstehend anhand der Zeichnung beispielsweise näher erläutert. Diese zeigt in
- Fig. 1: eine erste Ausführungsform einer erfindungsgemäßen Radnabe im Schnitt mit einstufigem Planetengetriebe,
- Fig. 2: eine zweite Ausführungsform, ebenfalls im Schnitt mit zweistufigem Planetengetriebe,
- Fig. 3: eine vorteilhafte Ausbildung des Bremskolbens,
- Fig. 4: eine weitere Ausgestaltung einer erfindungsgemäßen Radnabe und
- Fig. 5: in Explosionsdarstellung die erste und zweite Montagebaugruppe der Radnabe nach Fig. 1.

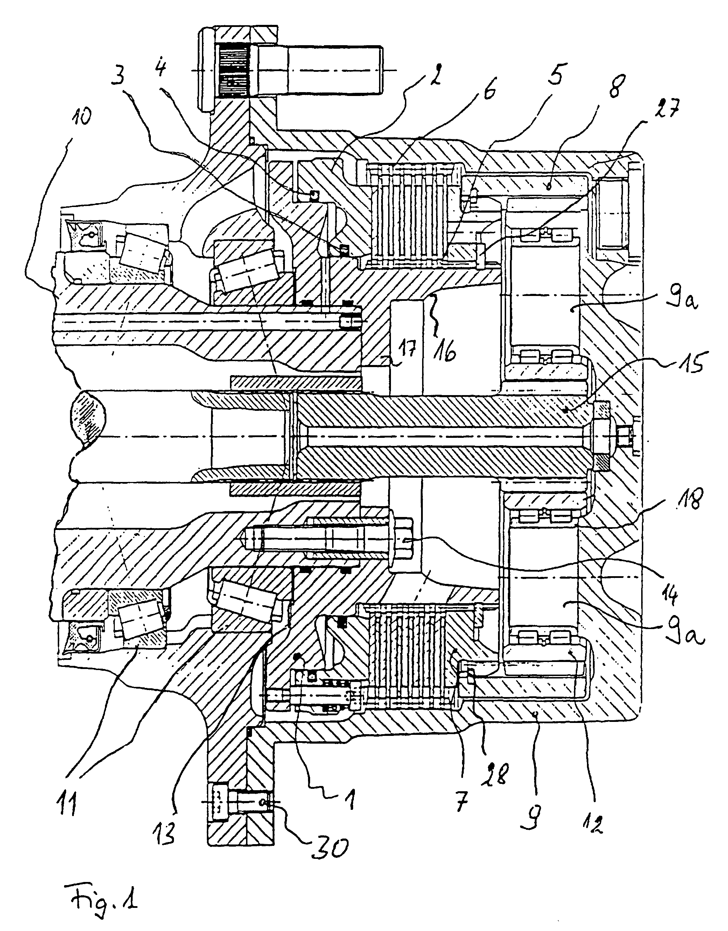

Figur 1 stellt eine erste Ausführungsform einer Radnabe 9 mit integriertem Planetengetriebe und direkt wirkender Lamellenbremse dar. Dabei ist die Radnabe 9 für eine nur angedeutete Achse (Achsträger 10) bestimmt, die beispielsweise bei einem nicht weiter dargestellten Radlader oder Mobilbagger zum Einsatz gelangen kann.

Die Radnabe 9 weist ein Planetengetriebe auf, welches ein Sonnenritzel 15, Planetenräder 12 und ein Hohlrad 8 beinhaltet. Die Planetenräder 12 sind auf einem Planetenträger angeordnet, der von Lagerzapfen 9a der Radnabe 9 gebildet sind. Das Hohlrad 8 ist dabei als feststehendes Getriebeglied ausgebildet.

Die Radnabe 9 weist eine Bremse auf, die direkt auf die Radnabe 9 wirkt. Dazu beinhaltet die Bremse einen Bremsträger 1, der auf dem Achskörper 10 zentriert ist. Dieser Bremsträger 1 weist eine topfförmige Innenkontur 16 und einen Innenflansch 17 auf, der zur Befestigung des Bremsträgers 1 am Achskörper 10 dient. Hierzu sind Befestigungsmittel 14, vorzugsweise Befestigungsschrauben, vorgesehen.

Auf dem Bremsträger 1 ist beweglich ein Bremskolben 2 angeordnet, der mit Bremskolbendichtungen 3 und 4 abgedichtet ist. Der Bremskolben 2 drückt die Innenlamellen 5 bzw. die Außenlamellen 6 der Bremse bei Druckbeaufschlagung gegen einen Bremsstützring 7 und erzeugt somit ein Bremsmoment, das die Radnabe 9 abbremst. Die Innenlamellen 5 sind dabei über den Bremsträger 1 mit dem Achskörper 10 verbunden, während die Außenlamellen 6 direkt mit der Radnabe 9 in Wirkverbindung stehen.

Der Bremsstützring 7 weist eine Außenverzahnung auf, die das Hohlrad 8 des Planetengetriebes trägt.

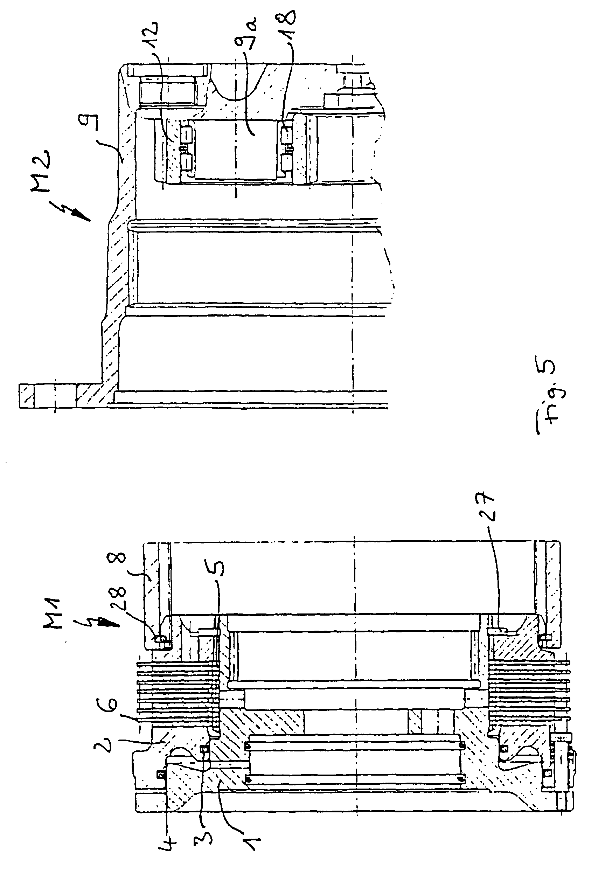

Der Bremsträger 1 bildet zusammen mit dem Bremskolben 2, dessen Dichtungen 3, 4, den Bremslamellen 5, 6, dem Bremsstützring 7 und dem Hohlrad 8 eine erste Montagebaugruppe, die als Einzelteil in Figur 5 dargestellt und mit M1 bezeichnet ist. Dabei ist das Hohlrad 8 an dem Bremsstützring 7 befestigt, hierzu ist beispielsweise ein Sicherungsring 28 vorgesehen. Der Bremsstützring 7 ist seinerseits mittels eines Sicherungsringes 27 am Bremsträger 1 befestigt.

Die Lagerzapfen 9a der Radnabe 9, die den Planetenträger bilden, nehmen Lager 18 auf, mittels derer die Planetenräder 12 gelagert sind. Dabei bildet die topfförmige Radnabe 9 zusammen mit den Planetenrädern 12 und deren Lagern 18 eine zweite Montagebaugruppe, die als Einzelteil in Figur 5 dargestellt und dort mit M2 bezeichnet ist.

Diese Art der Gestaltung der Radnabe 9 mit Aufteilung in zwei Montagebaugruppen bzw. Montagemodule M1, M2 erlaubt es, daß das Planetengetriebe und die Bremse getrennt voneinander ausgeführt werden kann. Somit wird eine rationale Fertigung und Montage sowie eine einfache Demontage zur Bremsenreparatur ermöglicht.

Die Montage erfolgt dabei folgendermaßen: Der Bremsträger 1 wird vor der Anbringung an dem Achskörper 10 mit dem Bremskolben 2 und den Dichtungen 3, 4 versehen, danach werden die Bremslamellen 5 und 6 aufgeschoben und der Bremsstützring 7 mit dem Sicherungsring 27 auf den Bremsträger 1 befestigt. Mittels des Sicherungsringes 28 wird danach das Hohlrad 8 mit dem Bremsstützring 7 verbunden. Die so gebildete erste Montagebaugruppe M1 wird nach Einlegen von Dichtungen 29 auf den Achsträger 10 geschoben und mit den Befestigungsschrauben 14 verbunden. Dabei erfolgt gleichzeitig mittels Einstellscheiben 13 eine Vorspannung der Radlager 11.

Anschließend wird die zweite Montagebaugruppe M2, die aus der Radnabe 9, den Planetenrädern 12 und den Lagern 18 besteht, über die erste Montagebaugruppe M1 geschoben und mittels Hilfsschrauben 30 befestigt.

Die Demontage ist in umgekehrter Reihenfolge vorzunehmen, wobei nach der Demontage der Radnabe 9 mit Planetenrädern 12 und Lagern 18 die Lamellen 5, 6 der Bremse zur Kontrolle gut zugänglich sind.

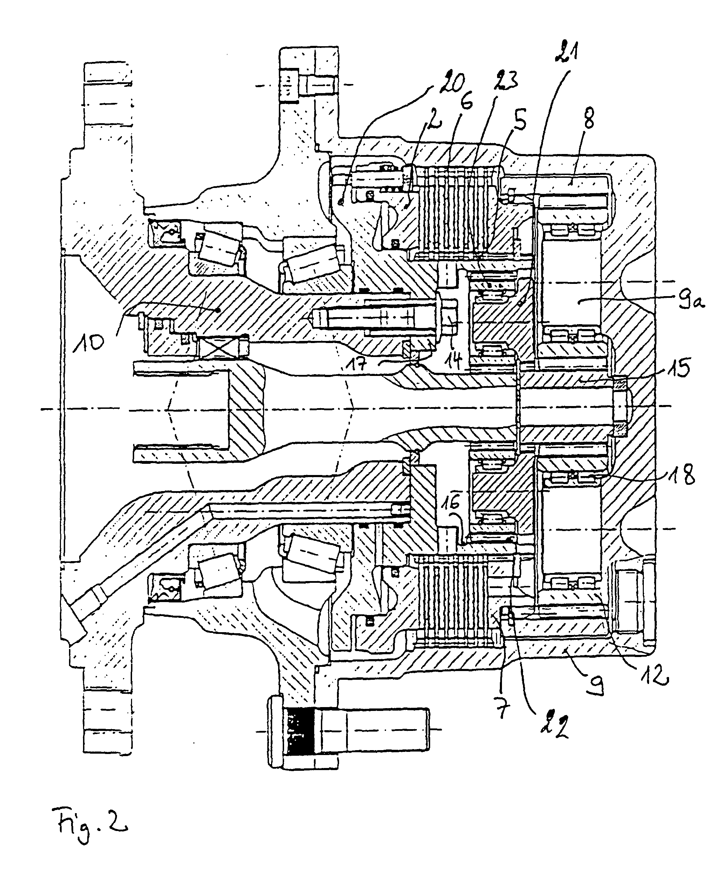

Figur 2 zeigt eine weitere Ausführungsform einer erfindungsgemäßen Radnabe, wobei mit Ausnahme des Bezugszeichens für den Bremsträger dieselben Bezugszeichen, wie in Figur 1 verwandt sind. Bei dieser Ausführungsform ist der Bremsträger mit 20 bezeichnet. Die topfförmige Innenkontur 16 des Bremsträgers 20 ist bei dieser Ausführungsform mit einer Hohlradverzahnung versehen, die das Hohlrad für ein zweites Planetengetriebe 21 bildet. Diese Hohlradverzahnung ist mit 22 bezeichnet. Die Planetenräder des zweiten Planetengetriebes 21 sind mit 23 bezeichnet und greifen in die Hohlradverzahnung 22 ein. Erkennbar läßt sich aufgrund der Innenkontur 16 des Bremsträgers 20 bei gegebenem Bauraum somit auf einfache Weise eine zweite Planetenstufe verwirklichen.

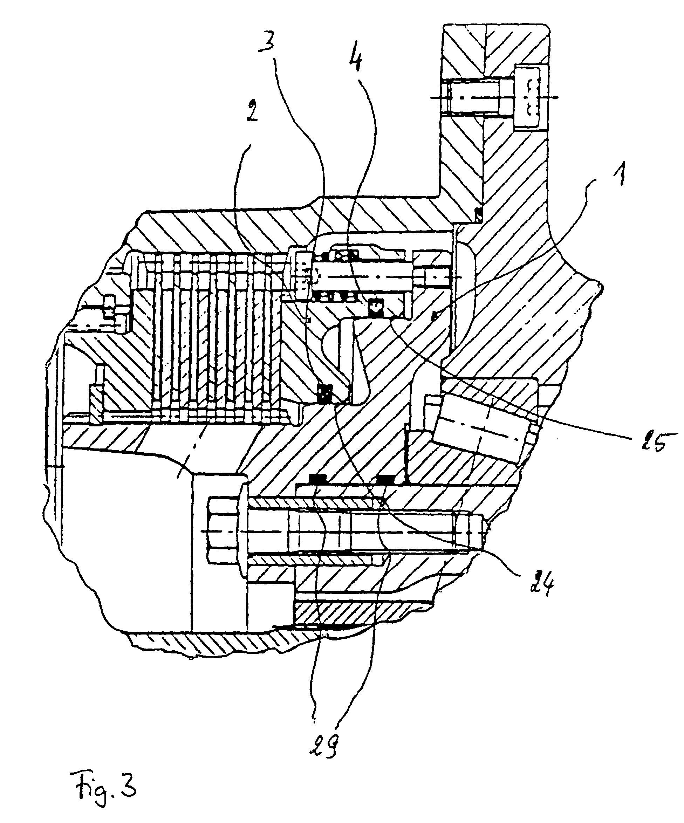

In Figur 3 ist ein vergrößertes Detail der Ausführungsform nach Figur 1 dargestellt, nämlich eine vorteilhafte Ausbildung des Bremskolbens 2. Der Bremskolben 2 ist nämlich mit einer inneren Umfangsnut 24 und einer äußeren Umfangsnut 25 versehen, die zur Aufnahme der Dichtungen 3, 4 dienen und somit eine einfache Montage derselben ohne Hilfsmittel ermöglichen.

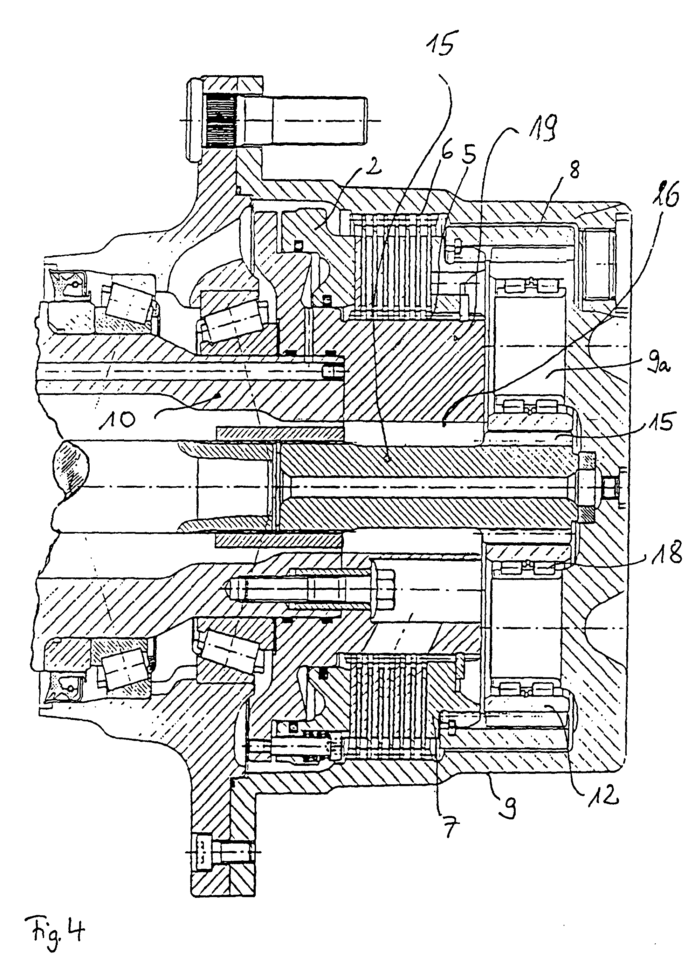

In Figur 4 ist eine weitere Ausführungsform einer erfindungsgemäßen Radnabe dargestellt. Auch hier sind dieselben Bezugszeichen wie in den vorangegangenen Figuren verwandt, sofern gleiche Teile betroffen sind, mit Ausnahme des Bremsträgers, der bei dieser Ausführungsform mit 19 bezeichnet ist. Dieser Bremsträger 19 weist keine topfförmige Innenkontur auf, sondern seine Innenkontur ist nur als Bohrung 26 ausgebildet, die die Montage des Ritzels 15 des einzigen Planetengetriebes dieser Ausführungsform ermöglicht.

In Figur 5 sind, wie vorerwähnt, die beiden Montagebaugruppen, nämlich die Bremsträgerbaugruppe M1 und die Radnabenbaugruppe M2 dargestellt, um die einfache Art der Montage und ggf. Demontage der erfindungsgemäßen Radnabe zu verdeutlichen.

## Patentansprüche

1. Radnabe mit integriertem Planetengetriebe und Lamellenbremse, wobei das Planetengetriebe ein Ritzel (15), einen Planetenträger mit daran gehaltenen Planetenrädern (12) und ein Hohlrad (8) aufweist, wobei die Lamellenbremse Innenlamellen (5) und Außenlamellen (6), die direkt mit der Radnabe (9) in Wirkverbindung stehen, sowie einen Bremsträger (1,19,20), einen Bremskolben (2) und zugehörige Dichtungen und einen Bremsstützring (7) aufweist, wobei die Innenlamellen (5) über den Bremsträger (1,19,20) mit einem Achskörper (10) verbunden sind, wobei der Bremsträger (1,19,20) einen innen angeordneten Befestigungsflansch (17) sowie eine Bohrung als Innenkontur für die Montage des Ritzels (15) aufweist, wobei zumindest der Bremsträger (1,19,20), die Bremslamellen (5,6), der Bremstützring (7) und ein Element des Planetengetriebes als eine Montagebaugruppe ausgebildet sind, die über den Befestigungsflansch (17) und Befestigungselemente (16) mit dem Achskörper (10) verbunden ist, und wobei die Radnabe (9) topfförmig ist und ein anderes Element des Planetengetriebes enthält und als weitere Montagebaugruppe ausgebildet ist, die über die eine Montagebaugruppe schiebbar ist, wobei die topfförmige Radnabe (9) in die Außenlamellen (6) der Bremse eingreift,
**dadurch gekennzeichnet,**
**daß** die eine erste Montagebaugruppe (M1) neben dem Bremsträger (1,19,20), den Bremslamellen (5,6) und dem Bremsstützring (7) auch den Bremskolben (2) mit dessen Dichtungen (3,4) sowie das Hohlrad (8) enthält, wobei das Hohlrad (8) an der ersten Montagebaugruppe (M1) befestigt ist, und daß die weitere zweite Montagebaugruppe (M2) neben der einteiligen topfförmigen Radnabe (9) auch die Planetenräder (12) und deren Lager (18) aufweist.

2. Radnabe nach Anspruch 1,
**dadurch gekennzeichnet,**
**daß** das Hohlrad (8) an dem Bremsstützring (7) befestigt ist.

3. Radnabe nach Anspruch 1 oder 2,
**dadurch gekennzeichnet,**
**daß** der Planetenträger von Lagerzapfen (9a) der Radnabe (9) gebildet ist.

4. Radnabe nach Anspruch 1, 2 oder 3,
**dadurch gekennzeichnet,**
**daß** der Bremsträger (1,20) eine topfförmige Innenkontur (16) aufweist.

5. Radnabe nach Anspruch 4,
**dadurch gekennzeichnet,**
**daß** innerhalb der topfförmigen Innenkontur (16) des Bremsträgers (20) ein zweites Planetengetriebe (21) angeordnet ist, wobei der Bremsträger die Verzahnung des Hohlrades (22) des zweiten Planetengetriebes (21) bildet.

6. Radnabe nach Anspruch 1, 2 oder 3,
**dadurch gekennzeichnet,**
**daß** der Bremsträger (19) als Innenkontur nur eine Bohrung (26) für die Ritzelmontage aufweist.

7. Radnabe nach Anspruch 1 oder einem der folgenden,
**dadurch gekennzeichnet,**
**daß** die Dichtungen (3,4) des stufenförmigen Bremskolbens (2) in Umfangsnuten (24,25) des Bremskolbens (2) angeordnet sind.

8. Radnabe nach Anspruch 1 oder einem der folgenden,
**dadurch gekennzeichnet,**
**daß** die Radlager (11) über Einstellscheiben (13) durch den Bremsträger (1,19,20) verspannbar sind.

## Claims

1. A wheel hub with integrated planetary gear and multi-disc brake, wherein the planetary gear has a pinion (15), a planet gear carrier with planet gears (15) mounted thereon and an annular gear (8), wherein the multi-disc brake has inner discs (5) and outer discs (6) which are operatively connected directly to the wheel hub (9), as well as a brake carrier (1, 19, 20), a brake piston (2) and associated seals and a brake support ring (7), wherein the inner discs (5) are connected by way of the brake carrier (1, 19, 20) to an axle body (10), wherein the brake carrier (1, 19, 20) has an internally arranged fixing flange (17) and a bore as an internal contour for mounting of the pinion (15), wherein at least the brake carrier (1, 19, 20), the brake discs (5, 6), the brake support ring (7) and an element of the planetary gear are in the form of an assembly unit which is connected to the axle body (10) by way of the fixing flange (17) and fixing elements (16), and wherein the wheel hub (9) is cup-shaped and contains another element of the planetary gear and is in the form of a further assembly unit which can be pushed over the one assembly unit, wherein the cup-shaped wheel hub (9) engages into the outer discs (6) of the brake, **characterised in that** the one first assembly unit (M1), besides the brake carrier (1, 19, 20), the brake discs (5, 6) and the brake support ring (7), also includes the brake piston (2) with its seals (3, 4) and the annular gear (8), wherein the annular gear (8) is fixed to the first assembly unit (M1), and that the further second assembly unit (M2) besides the one-piece cup-shaped wheel hub (9) also has the planet gears (12) and the bearings (18) thereof.

2. A wheel hub according to claim 1 **characterised in that** the annular gear (8) is fixed to the brake support ring (7).

3. A wheel hub according to claim 1 or claim 2 **characterised in that** the planet gear carrier is formed by bearing trunnions (9a) of the wheel hub (9).

4. A wheel hub according to claim 1, claim 2 or claim 3 **characterised in that** the brake carrier (1, 20) is of a cup-shaped internal contour (16).

5. A wheel hub according to claim 4 **characterised in that** arranged within the cup-shaped internal contour (6) of the brake carrier (20) is a second planetary gear (21), the brake carrier forming the tooth arrangement of the annular gear (22) of the second planetary gear (21).

6. A wheel hub according to claim 1, claim 2 or claim 3 **characterised in that** the brake carrier (19) has as the internal contour only a bore (26) for pinion mounting.

7. A wheel hub according to claim 1 or one of the following claims **characterised in that** the seals (3, 4) of the stepped brake piston (2) are arranged in peripheral grooves (24) in the brake piston (2).

8. A wheel hub according to claim 1 or one of the following claims **characterised in that** the wheel bearings (11) can be braced by the brake carrier (1, 19, 20) by way of adjusting shims (13).

## Revendications

1. Moyeu de roue avec engrenage planétaire et frein multidisque intégrés, dans lequel l'engrenage planétaire comprend un pignon (15), un support planétaire avec des roues planétaires (12) maintenues sur celui-ci et une couronne intérieure (8), le frein multidisque comporte des disques intérieurs (5) et des disques extérieurs (6) en liaison d'action directe avec le moyeu de roue (9), ainsi qu'un support de frein (1, 19, 20), un piston de frein (2) et des joints d'étanchéité associés et un anneau d'appui de frein (7), les disques intérieurs (5) sont reliés à un corps d'essieu (10) via le support de frein (1, 19, 20), le support de frein (1, 19, 20) comprend une bride de fixation (17) agencée à l'intérieur ainsi qu'un perçage à titre de contour intérieur pour le montage du pignon (15), au moins le support de frein (1, 19, 20), les disques de frein (5, 6), l'anneau d'appui de frein (7), et un élément de l'engrenage planétaire sont réalisés sous forme d'un groupe structurel de montage qui est relié au corps d'essieu (10) via la bride de fixation (17) et via des éléments de fixation (16), et le moyeu de roue (9) est en forme de pot et comporte un autre élément de l'engrenage planétaire et est réalisé sous forme d'un autre groupe structurel de montage qui peut être enfilé sur le premier groupe structurel de montage, et le moyeu de roue (9) en forme de pot s'engage dans les disques extérieurs (6) du frein, **caractérisé en ce que** ledit premier groupe structurel de montage (M1) comprend, outre le support de frein (1, 19, 20), les disques de frein (5, 6) et l'anneau d'appui de frein (7), également le piston de frein (2) avec ses joints d'étanchéité ainsi que la couronne intérieure (8), ladite couronne intérieure (8) étant fixée sur le premier groupe structurel de montage (M1), et **en ce que** l'autre second groupe structurel de montage (M2) comprend, outre le moyeu de roue (9) réalisé en une seule pièce en forme de pot, également les roues planétaires (12) et leurs paliers (18).

2. Moyeu de roue selon la revendication 1, **caractérisé en ce que** la couronne intérieure (8) est fixée sur l'anneau d'appui de frein (7).

3. Moyeu de roue selon l'une ou l'autre des revendications 1 et 2, **caractérisé en ce que** le support planétaire est formé par des tourillons de palier (9a) du moyeu de roue (9).

4. Moyeu de roue selon l'une quelconque des revendications 1, 2 ou 3, **caractérisé en ce que** le support de frein (1, 20) présente un contour intérieur (16) en forme de pot.

5. Moyeu de roue selon la revendication 4, **caractérisé en ce qu'**un second engrenage planétaire (21) est agencé à l'intérieur du contour intérieur (16) en forme de pot du support de frein (20), le support de frein formant la denture de la couronne intérieure (22) du second engrenage planétaire (21).

6. Moyeu de roue selon l'une quelconque des revendications 1, 2 ou 3, **caractérisé en ce que** le support de frein (19) présente, à titre de contour intérieur, un seul perçage (26) pour le montage du pignon.

7. Moyeu de roue selon la revendication 1 ou selon l'une des revendications suivantes, **caractérisé en ce que** les joints d'étanchéité (3, 4) du piston de frein (2) en gradins sont agencés dans des gorges périphériques (24, 25) du piston de frein (2).

8. Moyeu de frein selon la revendication 1 ou selon l'une des revendications suivantes, **caractérisé en ce que** les paliers de roue (11) peuvent être serrés par le support de frein (1, 19, 20) via des plaquettes de réglage (13).
